# EUROPEAN PATENT APPLICATION

(11) **EP 4 691 218 A1**
(43) Date of publication of application: **11.02.2026**
(21) Application number: 25176276.1
(22) Date of filing: 14.05.2025
(51) Int. Cl.: A01B 63/16, A01C 7/20

(54) **AGRICULTURAL IMPLEMENTS AND RELATED METHODS**

(30) Priority: 07.08.2024 US 202463680358 P
(71) Applicant: Agco Corporation, Duluth, Georgia 30096 (US)
(72) Inventor: FANSHIER, Benjamin Anson, Hesston, 67062-0969 (US)
(74) Representative: AGCO Intellectual Property Department

(57) **Abstract**

An agricultural implement includes a frame coupled to a tow hitch, a toolbar coupled to frame, a plurality of row units carried by the toolbar, a first wheel assembly coupled to the frame, a second wheel assembly coupled to the frame. Each wheel assembly is configured to be moved laterally and longitudinally relative to the frame. The tow hitch is configured to be pulled by a tractor. Methods of configuring agricultural implements are also disclosed.

## Description

### FIELD

Embodiments of the present disclosure relate generally to planters and other agricultural equipment, and in particular, towed planters.

### BACKGROUND

Agricultural machines such as planters with a plurality of row units are used to plant seeds upon or in the ground. Planters may have a central portion pulled by a tractor, and may have wings extending from either side. The individual row units, mounted to the center section or to a wing, typically deliver seeds into separate rows. Each of the row units has one or more ground-engaging tools, such as opening discs, row cleaners, closing discs, etc. The row units may receive seed from a common central hopper, which may be used to limit the effect of excessive weight on the wings. That is, the center section may be supported by more wheels or larger wheels, and thus may be better able to support the weight of the filled central hopper without exerting excessive pressure on the ground. To increase speed with which fields can be planted, planters are becoming wider and the seed hoppers that feed the row units are becoming larger.

For planting, it is typically desirable for wheels to travel between planting rows, which helps limit the influence of soil compaction from the tires on the crop to be planted. Therefore, the possible spacing of the wheels is determined by the spacing of the rows (or vice versa). For example, for row spacing of 30 inches (76 cm), wheels would be desirably spaced at a multiple thereof (as measured from centerline to centerline), such as 120 inches (3.05 m). However, such spacing may not be desirable for transport or other operations. In particular, wheels at this spacing may be too wide for normal transport (e.g., towing on public roadways or carrying on standard trailers).

### BRIEF SUMMARY

In some embodiments, an agricultural implement includes a frame coupled to a tow hitch, a toolbar coupled to frame, a plurality of row units carried by the toolbar, a first wheel assembly coupled to the frame, a second wheel assembly coupled to the frame. Each wheel assembly is configured to be moved laterally and longitudinally relative to the frame. The tow hitch is configured to be pulled by a tractor.

In further embodiments, the first wheel assembly is coupled to the frame by a first parallel linkage and a first actuator, and the second wheel assembly is coupled to the frame by a second parallel linkage and a second actuator. Each parallel linkage is configured to change a position of a corresponding wheel assembly relative to the frame, in a forward-and-aft direction and/or in a lateral direction.

Each parallel linkage may include a front link and a rear link, the front link positioned forward of the rear link when the implement travels in a normal forward direction of travel while working an agricultural field.

In certain embodiments, the first wheel assembly and the second wheel assembly each comprise a front wheel and a rear wheel, wherein each front wheel is connected to a corresponding rear wheel by a swing arm.

The first wheel assembly and the second wheel assembly are each configured to support the frame.

Each row unit may include at least one ground-engaging tool, and may be coupled to the toolbar by a parallel linkage. The row units may be planter row units and/or fertilizer row units.

The frame may have a first section and at least one wing section hingedly coupled to the first section.

In some embodiments, a method of configuring the agricultural implements includes moving the first and second wheel assemblies laterally and longitudinally relative to the frame.

Moving the first and second wheel assemblies laterally and longitudinally relative to the frame may include adjusting a first actuator coupled to the first wheel assembly and the frame, and adjusting a second actuator coupled to the second wheel assembly and the frame.

Moving the first and second wheel assemblies may include changing a track width between the first and second wheel assemblies and/or changing a longitudinal distance between the tow hitch and the first and second wheel assemblies.

The first and second wheel assemblies may be moved laterally and longitudinally relative to the frame while pulling the agricultural implement with a tractor.

Other embodiments include a method of configuring the agricultural implements, which includes adjusting the first and second actuators to move the first and second wheel assemblies relative to the frame.

Adjusting the first and second actuators to move the first and second wheel assemblies relative to the frame may include moving the first and second wheel assemblies in a forward-and-aft direction relative to the frame and/or in a lateral direction relative to the frame.

In some embodiments, an agricultural implement includes a frame coupled to a tow hitch, a toolbar coupled to frame, a plurality of row units carried by the toolbar, a first wheel assembly coupled to the frame by a first parallel linkage and a first actuator, and a second wheel assembly coupled to the frame by a second parallel linkage and a second actuator. Each parallel linkage is configured to change a position of a corresponding wheel assembly relative to the frame. The tow hitch is configured to be pulled by a tractor.

Within the scope of this application it should be understood that the various aspects, embodiments, examples, and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 is a simplified top view of a tractor pulling an implement;
FIG. 2 is a simplified side view of a row unit that may be carried by the implement shown in FIG. 1;
FIG. 3 is a simplified front perspective view of the implement pulled by the tractor in FIG. 1;
FIG. 4A is a simplified rear perspective view of a portion of the implement of FIG. 3 in a working configuration;
FIG. 4B is a simplified bottom view of a portion of the implement of FIG. 3 in the working configuration;
FIG. 5A is a simplified rear perspective view of a portion of the implement of FIG. 3 in a transport configuration;
FIG. 5B is a simplified bottom view of a portion of the implement of FIG. 3 in the transport configuration;
FIG. 6 is a simplified bottom view of a portion of the implement of FIG. 3 showing the wheel positions in the working configuration and the transport configuration;
FIG. 7 is a simplified perspective view of a portion of the implement of FIG. 3 in the transport configuration; and
FIG. 8 is a simplified perspective view of a portion of the implement of FIG. 3 in the working configuration.

### DETAILED DESCRIPTION

The illustrations presented herein are not actual views of any implement or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "longitudinally" with respect to a vehicle frame refers to a direction parallel to a normal forward direction of travel of the vehicle. As used herein, the term "laterally" with respect to a vehicle frame refers to a direction perpendicular to a normal forward direction of travel of the vehicle in a plane parallel to the ground.

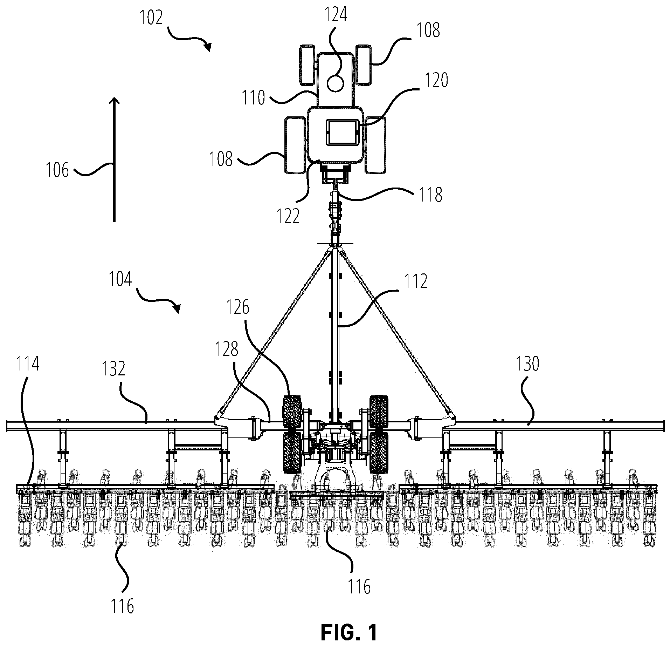

FIG. 1 illustrates a tractor 102 drawing an agricultural implement 104 in a forward direction 106. The tractor 102 has wheels 108, an engine, a chassis 110, and other elements as known in the art. The implement 104 has a frame 112 carrying a toolbar 114 supporting row units 116. The row units 116 may optionally be connected to a central hopper carried by the frame 112 and containing seed to be planted and/or fertilizer to be applied. That is, the row units 116 may be planter and/or fertilizer row units of any design, which are generally known in the art. The row units 116 include one or more ground-engaging tools and other tools for working the field, such as opening discs, row cleaners, closing discs, seed meters, seed tubes, fertilizer tubes, valves, actuators, etc. The frame 112 includes a tow hitch 118, by which the implement 104 is connected to the tractor 102, and which enables the tractor 102 to pull the implement 104. A computer 120, which may include a central processing unit ("CPU"), memory, implement controller, and graphical user interface ("GUI") (*e.g.*, a touch-screen interface), is typically located in an operator cabin 122 of the tractor 102. A global positioning system GPS receiver 124 may be mounted to the tractor 102 and connected to communicate with the computer 120. The implement controller is configured to communicate with the row units 116 and/or the GPS receiver 124, such as by wired or wireless communication.

The implement 104 is supported in the field by wheels 126 coupled to the frame 112. The frame 112 may include a first section 128 (*e.g.*, a center section) configured to be towed by the tractor 102, and one or more wing sections 130, 132 hingedly coupled to the first section 128. For example, and as shown in FIG. 1, the first section 128 may be a center section, and two wing sections 130, 132 may be attached to opposite sides thereof. The wing sections 130, 132 may fold for transport or storage, and unfold (as shown in FIG. 1) for planting, fertilizing, or other field operations. The wing sections 130, 132 may or may not be supported by their own wheels; in the embodiment shown, wing wheels are omitted. The wing sections 130, 132 may carry sections of the toolbar 114 that also carry row units 116. The sections of the toolbar 114 may generally be in-line with one another when in use. That is, the portions of the toolbar 114 carried by the first section 128 may align with the portions of the toolbar 114 carried by the wing sections 130, 132. In other embodiments, the portions of the toolbar 114 may be staggered from one another.

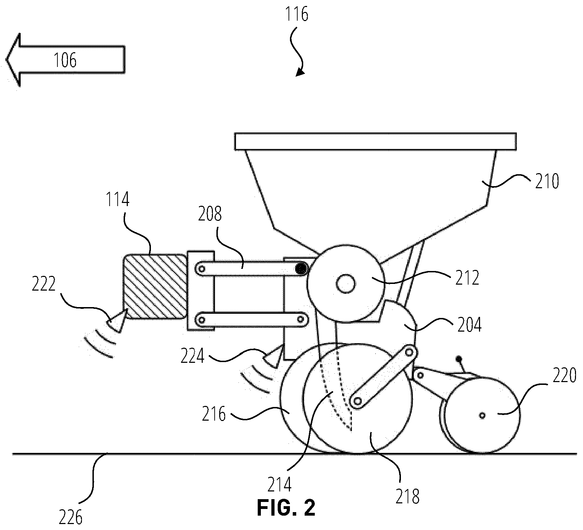

The row units 116 may be any type of ground-engaging device for planting, seeding, fertilizing, tilling, or otherwise working crops or soil, typically in rows. As an example, FIG. 2 is a simplified side view illustrating a single row unit 116 in the form of a planter row unit. The row unit 116 has a body 204 connected to the toolbar 114 by a height-adjustable parallel linkage 208, enabling the row unit 116 to move vertically independent of the toolbar 114. In some embodiments, the body 204 of the row unit 116 may be connected to the toolbar 114 by another structure, such as a rotating arm. The body 204 may be a unitary member, or may include one or more members coupled together (*e.g*., by bolts, welds, *etc*.). The body 204 operably supports one or more of a hopper 210, a seed meter 212, a seed delivery mechanism 214 (*e.g*., a tube, a wheel, a brush, *etc*.), a gauge wheel 216, a seed trench opening assembly 218 (*e.g*., opening discs, a blade, *etc*.), a trench closing assembly 220 (*e.g*, closing wheels, bushes, packer wheels, *etc*.), and/or any other components as known in the art. Other row units and tools are shown in International Patent Application Publication WO 2023/062450, "Row Unit Comprising a Covering Device and Methods of Planting Seeds," published April 20, 2023. It should be understood that the row unit 116 shown in FIG. 2 may optionally be a part of a central fill planter, in which case the hopper 134 may be one or more mini-hoppers fed by a material hopper carried by the frame 112 of the agricultural implement 104 (for example, as shown in FIG. 1 of International Patent Application Publication WO 2024/105474, "Agricultural Implement and Related Methods," published May 23, 2024). In other embodiments, the central material hopper may be omitted, and each row unit 116 may simply use its own hopper 210 alone.

The row unit 116 may include one or more sensors 222, 224 to determine a position of the row unit 116 and/or the toolbar 114 relative to a ground surface 226. Various sensors are described in, for example, U.S. Patent 10,874,042, "Seed Trench Depth Detection Systems," granted December 29, 2020. The sensors 222, 224 may provide information that can be used to adjust the position of the toolbar 114 and/or the row unit 116.

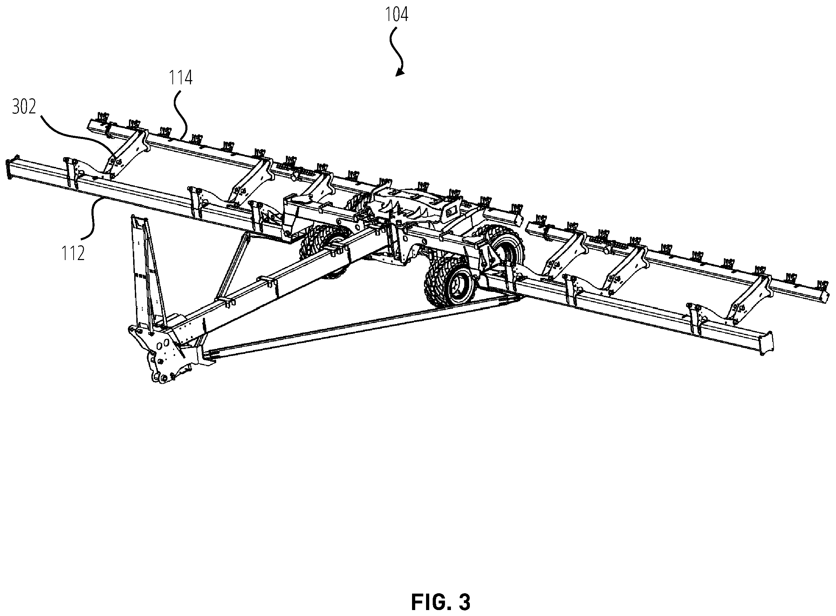

FIG. 3 is a simplified perspective view of the implement 104 disconnected from the tractor 102 and without the row units 116 shown. The toolbar 114 may be connected to the frame 112 by brackets 302 configured to rotate or otherwise move the toolbar 114 relative to the frame 112. Thus the implement 104 may raise and lower the toolbar 114 to change the position of row units 116. The row units 116 may also include height adjustment (*e.g*., the height-adjustable parallel linkage 208 shown in FIG. 2) to individually control the position of the row units 116 relative to the ground.

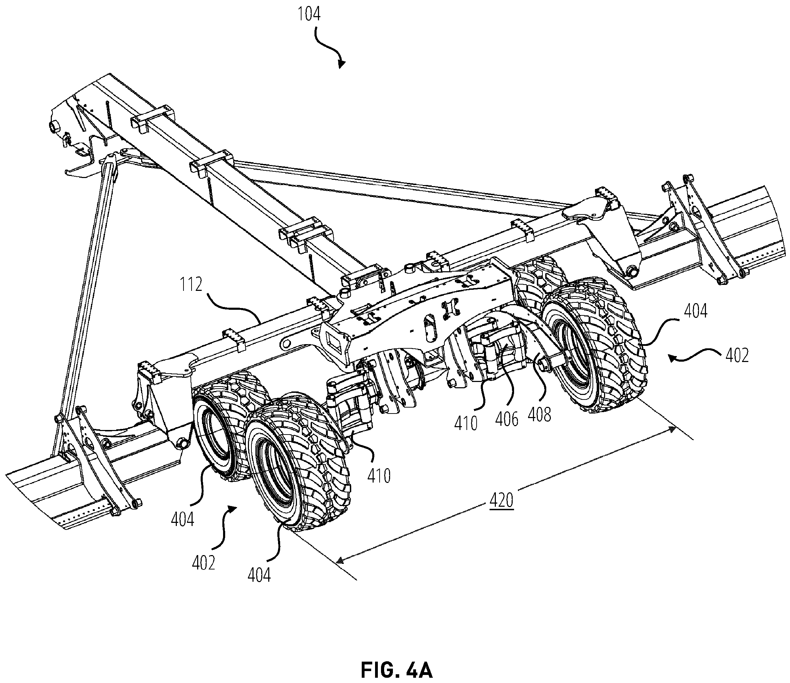

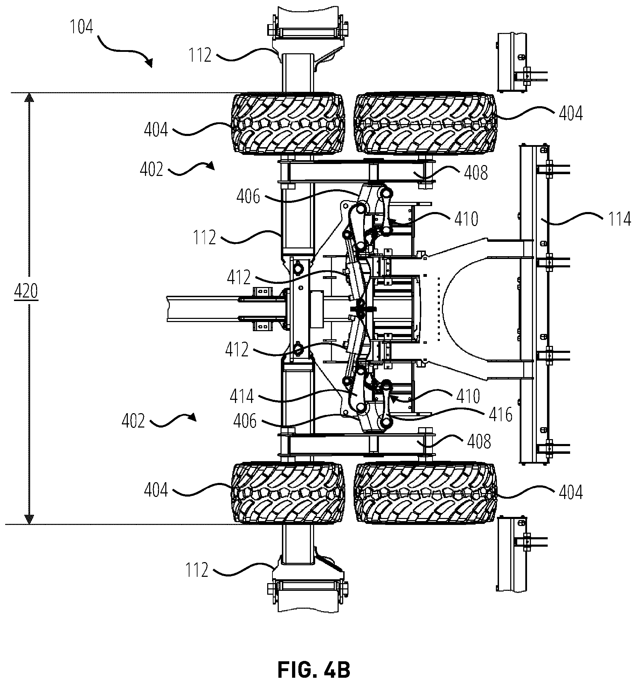

FIG. 4A is a simplified rear perspective view of the implement 104 with the row units 116 and toolbar 114 omitted. FIG. 4B is a simplified bottom view of the implement 104 with the row units 116 omitted. As shown, the implement 104 includes two wheel assemblies 402 configured to support the frame 112, each of which has front and rear wheels 404 connected to a wheel support link 406 by swing arms 408. The swing arms 408 enable the wheels 404 to move vertically relative to one another to distribute the load of the implement 104. Such wheel assemblies 402 are disclosed in U.S. Patent 10,881,044, "Planter with Full Tandem Offset Pivot," granted January 5, 2021. As shown, the wheels 404 may have tires of different diameters, and the swing arms 408 may be configured such that the distance from the wheel support link 406 to the axle of one wheel 404 is different than the distance from the wheel support link 406 to the axle of the other wheel 404. In other embodiments, each wheel assembly 402 may have only one wheel, or may have two wheels side-by-side, and the swing arms 408 may be omitted.

The wheel assemblies 402 support the frame 112 when the implement 104 is towed by the tractor 102 (*e.g*., to a field or within a field).

As shown in FIG. 4A and FIG. 4B, the wheel assemblies 402 are each coupled to the frame 112 by a parallel linkage 410 and an actuator 412. Each parallel linkage 410 is configured to change a position of the corresponding wheel assembly 402 relative to the frame 112. For example, FIG. 4A and FIG. 4B show the implement 104 in a working configuration, in which the parallel linkages 410 are extended outward. In this configuration, the track width (defined herein as the distance between the outer edges of each tire, and represented by the distance 420 between the outer edges of the wheels 404), is relatively wide.

Each parallel linkage 410 has a front link 414 and a rear link 416. The front link 414 is positioned forward of the rear link 416 when the implement 104 travels in the normal forward direction 106 of travel while working an agricultural field. Each parallel linkage 410 is configured to change the position of the corresponding wheel assembly 402 in a forward-and-aft direction relative to the frame 112, as well as in a lateral direction relative to the frame.

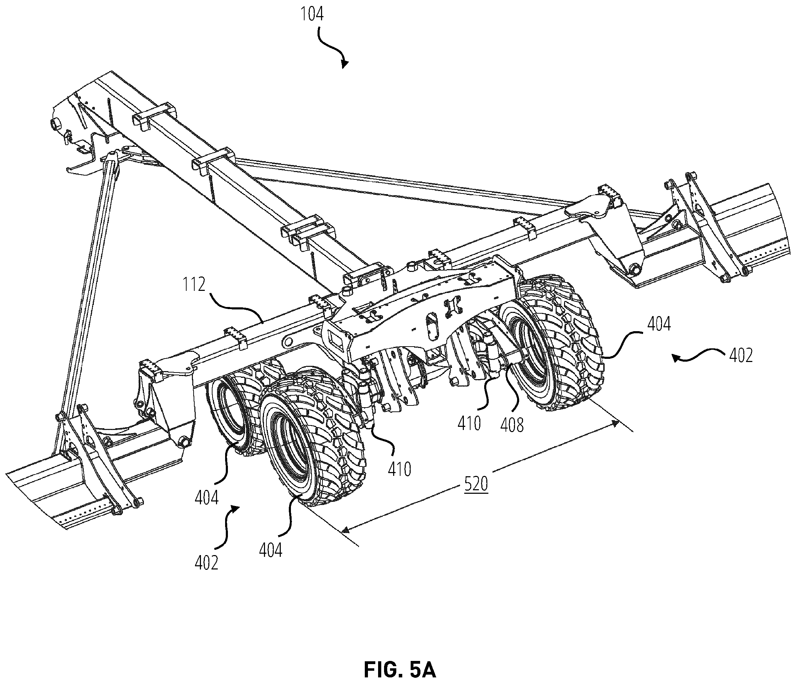

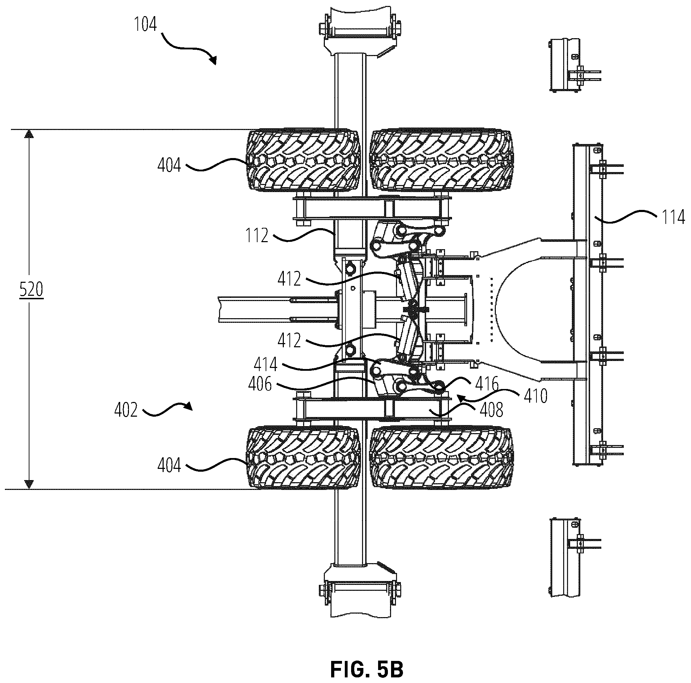

FIG. 5A and FIG. 5B are views of the implement 104 corresponding to the views of FIG. 4A and FIG. 4B, but with the wheel assemblies 402 in a transport configuration. As used herein, the terms "working configuration" and "transport configuration" are used for convenience of discussion and understanding, and are not intended to be limiting. The implement 104 may be used for working a field or transport in either configuration, depending on circumstances.

In the configuration shown in FIG. 5A and FIG. 5B, the parallel linkages 410 are extended forward (and therefore relatively inward as compared to the working configuration shown in FIG. 4A and FIG. 4B). In the transport configuration, the track width, represented by the distance 520, is narrower than the track width (distance 420) in the working configuration.

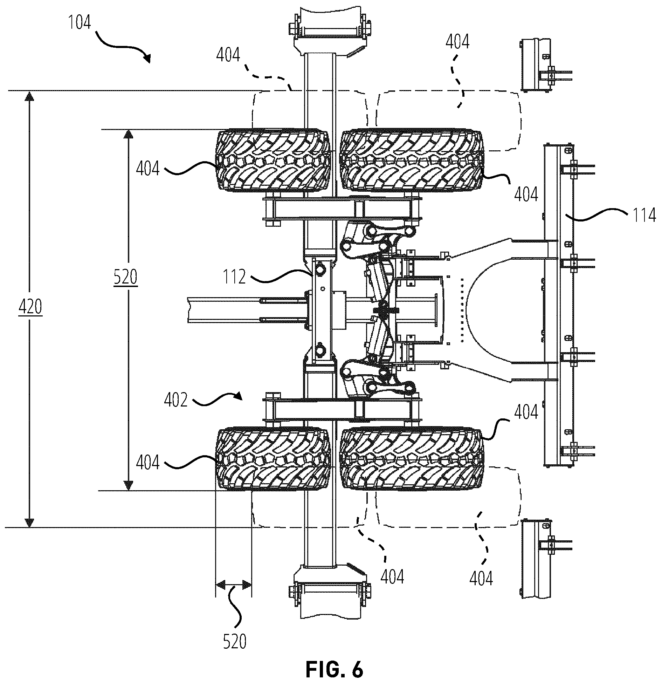

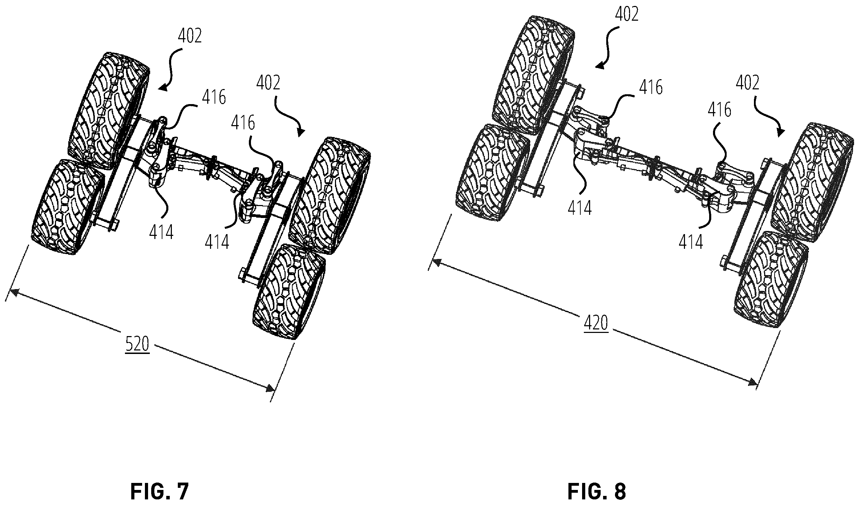

FIG. 6 is a simplified bottom view of the implement 104 in the transport configuration, similar to that shown in FIG. 5B, but also showing the position of the wheels 404 in the working configuration in dashed lines. FIG. 7 is a simplified perspective view of the wheel assemblies 402 in the transport configuration. FIG. 8 is a simplified perspective view of the wheel assemblies 402 in the working configuration.

In addition to the wider track width, the working configuration also has the wheels moved back by a displacement 520. This moves the center of gravity of the implement 104 relative to the wheels 404, which can affect how the implement 104 handles.

In the working configuration, the wheels 404 are farther rearward, opposite the forward direction 106 of travel. As the wheels 404 move further back, "negative hitch weight" issues may be lessened or resolved. Negative hitch weight is the tendency for the weight of a portion of the implement 104 behind the axle to cantilever about the axle and lift on the connection point on the tractor 102. Many tractors do not have the ability to push their hitches downward. If the hitch travels upward due to negative hitch weight, it may cause damage and/or make field maneuvers more difficult for the operator.

Additionally, the rearward position also places the wheels 404 closer to the row units 116. Positioning the row units 116 closer to the nominal but changing soil terrain position (as set by the wheels 404) may improve row unit function and therefore improve crop yield.

The transport configuration benefits from different axle and tire positions (*i.e*., wheels 404 shifted forward and narrower). For example, many European countries have a maximum allowed transport width of 3.0 meters (*i.e*., for travel as a trailed vehicle on public roadways). However, with wheels 404 positioned between planting rows spaced at common crop row spacings (*e.g*., a centerline-to-centerline distance of 3.05 meters), and including the width of the tires, the track width may be about 3.5 meters. As another example, standard semi-truck trailers in North America are about 2.6 meters wide. Conventional implements (and the implement 104 disclosed herein when in the working configuration) may have tires too wide to fit on such a trailer, because too little of the tire would be on the trailer platform. Thus, special trailers are typically required for conventional implements, and loading and unloading can require special equipment and techniques. Narrowing the positions of the wheels 404 is beneficial for shipping aboard semi-truck trailers as well as transport on narrow roads.

As discussed above, placing the wheels 404 further back (as in the working configuration) leads to higher hitch weight. This is helpful when planting a field, for example, because it allows the tractor to bear more of the implement weight. When transporting an implement along a roadway and at higher speed, however, that increased the hitch weight may exceed many tractor hitch load specifications. Moving the wheels 404 rearward to the transport configuration, which is possible with the implement 104 disclosed herein, enables the wheels 404 of the implement 104 to carry more of the load.

To change from one configuration to the other, the actuators 412 are adjusted to move the wheel assemblies 402 relative to the frame 112. Adjusting the actuators 412 moves the wheel assemblies 402 in a forward-and-aft direction relative to the frame 112 (*i.e.*, changing a longitudinal distance between the tow hitch 118 and the wheel assemblies 402), as well as in a lateral direction (*i.e*., changing the track width between the wheel assemblies 402).

The actuators 412 may typically be moved simultaneously so that the wheel assemblies 402 are aligned with one another throughout the reconfiguration. The actuators 412 may be controlled by an operator in the operator cabin 122, such as using the computer 120 or another control. To avoid scuffing (*i.e*., sliding along the ground, which may damage the ground surface and/or the tires), the actuators 412 may be activated while the tractor 102 is pulling the implement 104 at a low speed. In some embodiments, the computer 120 or other control may prevent the actuators 412 from adjusting while the implement 104 is stationary.

All references cited herein are incorporated herein in their entireties. If there is a conflict between definitions herein and in an incorporated reference, the definition herein shall control.

## Claims

1. An agricultural implement, comprising:
a frame coupled to a tow hitch, the tow hitch configured to be pulled by a tractor;
a toolbar coupled to frame;
a plurality of row units carried by the toolbar;
a first wheel assembly coupled to the frame; and
a second wheel assembly coupled to the frame;
wherein each wheel assembly is configured to be moved laterally and longitudinally relative to the frame.

2. The implement of claim 1, wherein the first wheel assembly is coupled to the frame by a first parallel linkage and a first actuator, and wherein the second wheel assembly is coupled to the frame by a second parallel linkage and a second actuator.

3. The implement of claim 2, wherein each parallel linkage is configured to change a position of a corresponding wheel assembly relative to the frame.

4. The implement of claim 2 or 3, wherein each parallel linkage comprises a front link and a rear link, the front link positioned forward of the rear link when the implement travels in a normal forward direction of travel whileworking an agricultural field.

5. The implement of any one of claims 2 to 4, wherein each parallel linkage is configured to change the position of the corresponding wheel assembly in a forward-and-aft direction relative to the frame.

6. The implement of any one of claims 2 to 5, wherein each parallel linkage is configured to change the position of the corresponding wheel assembly in a lateral direction relative to the frame.

7. The implement of any one of claims 1 to 6, wherein the first wheel assembly and the second wheel assembly each comprise a front wheel and a rear wheel, wherein each front wheel is connected to a corresponding rear wheel by a swing arm.

8. The implement of any one of claims 1 to 7, wherein the first wheel assembly and the second wheel assembly are each configured to support the frame.

9. The implement of any one of claims 1 to 8, wherein each row unit comprises a planter row unit and/or a fertilizer row unit.

10. The implement of any one of claims 1 to 9, wherein the frame comprises a first section and at least one wing section hingedly coupled to the first section.

11. A method of configuring the agricultural implement of any one of claims 1 to 10, the method comprising:
moving the first and second wheel assemblies laterally and longitudinally relative to the frame.

12. The method of claim 11, wherein moving the first and second wheel assemblies laterally and longitudinally relative to the frame comprises adjusting a first actuator coupled to the first wheel assembly and the frame, and adjusting a second actuator coupled to the second wheel assembly and the frame.

13. The method of claim 11 or 12, wherein moving the first and second wheel assemblies comprises changing a track width between the first and second wheel assemblies.

14. The method of any one of claims 11 to 13, wherein moving the first and second wheel assemblies comprises changing a longitudinal distance between the tow hitch and the first and second wheel assemblies.

15. The method of any one of claims 11 to 14, when dependent on claim 2, the method comprising:
adjusting the first and second actuators to move the first and second wheel assemblies relative to the frame.
